# EUROPEAN PATENT SPECIFICATION

(11) **EP 3 339 730 B1**
(45) Date of publication and mention of the grant of the patent: **18.08.2021**
(21) Application number: 16306786.1
(22) Date of filing: 22.12.2016
(51) Int. Cl.: F23C 6/04, F23C 5/08, F23M 5/02, F23L 7/00, F23L 15/04

(54) **STAGED COMBUSTION INSTALLATION AND METHOD**
GESTUFTE VERBRENNUNGSANLAGE UND VERFAHREN
INSTALLATION ET PROCÉDÉ DE COMBUSTION ÉTAGÉE

(43) Date of publication of application: 27.06.2018
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: JARRY, Luc, 61270 BEAUFAI (FR); JOUMANI, Youssef, 78121 CRESPIERES (FR); MULON, Jacques, 91300 MASSY (FR); TSIAVA, Rémi, 91250 SAINT GERMAIN-LES-CORBEIL (FR)
(74) Representative: Air Liquide

(56) References cited:
- EP-A1- 1 194 719
- EP-A1- 2 141 412
- US-A- 5 984 667
- US-A1- 2011 146 450

## Description

The present invention relates to the staged combustion of fuel with a combination of different oxidants.

NOx generation is a significant problem when combusting fuel in the presence of nitrogen (whereby the nitrogen may be present in the fuel, in the combustion oxidant and/or in the combustion environment).

Additional measures are often necessary to keep NOₓ formation under control.

One such measure is to stage the combustion oxidant injection in such a way as (a) to generate a first fuel-rich primary flame by partially combusting the fuel with primary oxidant and (b) to complete the combustion of the fuel with secondary oxidant in a separate secondary combustion stage.

It is also known in the art to improve the efficiency of the combustion process by heating at least one of the combustion reactants (fuel, primary oxidant, secondary oxidant, ...) before introducing same into the combustion zone. The heating of a combustion reactant upstream of the combustion zone is known as "preheating". The temperature to which a combustion reactant is preheated depends on the available heat source and on the nature of the reactant, but is frequently at or above 100°C.

A staged oxy-combustion burner for fuel combustion with preheated oxidant is known from EP-A-2141412. Said burner comprises at least one fuel injection passage with an inlet and an outlet, at least one injection passage for secondary oxidant, likewise having an inlet and an outlet, the outlet of the at least one injection passage for secondary oxidant being spaced apart from the outlet of the fuel-injection passage, the at least one injection passage for secondary oxidant being connected to a source of an oxidant having an oxygen content of at least 80%vol and a temperature higher than 100°C, the fuel injection passage being connected to a fuel source and to a source of primary oxidant at a temperature below 100°C. The outlets of the fuel and of the secondary-oxidant passages are aligned, the outlet(s) of the at least one fuel injection passage being flanked on each side by secondary-oxidant passage outlets.

In many industrial installations using burners to generate heat, it is important to be able to repair or maintain said burners in a safe manner and with minimal disruption to the process. In particular, it is important not to have to shut down the installation in order to have access to the burner parts concerned. If heat is generated by multiple burners, it is also desirable to be able to conduct maintenance work on one of the burners while other burners remain active.

In the case of a staged combustion process, the parts of the burner most frequently requiring maintenance or repair interventions are the injector(s) used to inject the primary fuel and/or the primary oxidant. This is in particular the case when the atmosphere in the combustion zone is rich in condensable material which may form deposits on or near the tips of the fuel and primary oxidant injectors, as is, for example, the case in incineration installations and in glass-melting or metal melting furnaces.

The present invention proposes a combustion installation for the staged combustion of fuel with a preheated secondary oxidant and allowing maintenance and repair work on the fuel and primary oxidant injection means in a safe manner and with minimal disruption to the combustion process.

Thereto the present invention provides an installation for the staged combustion of fuel with two oxidants. The installation comprises a combustion chamber which defines a combustion zone therewithin. The chamber comprises a floor, a roof and a refractory wall.

The refractory wall has a hot face on the side of the combustion zone and a cold face on the opposite side, i.e. on the side facing away from the combustion zone.

The wall also contains a burner assembly (one or more) for the injection of fuel, primary oxidant and secondary oxidant into the combustion zone.

The burner assembly comprises a primary passage extending from a primary inlet opening in the cold face to a primary outlet opening in the hot face.

The burner assembly also comprises one or more secondary passages. Each secondary passage extends from a secondary inlet opening in the cold face to a secondary outlet opening in the hot face. Each secondary passage is also spaced apart from the primary passage of the burner assembly.

The installation further comprises a metallic primary injection unit and a separate equally metallic secondary injection unit.

The primary injection unit has a fuel inlet and a primary oxidant inlet. The primary injection unit also has a primary burner which terminates in a primary injection end for the injection of the fuel and the primary oxidant into the combustion zone. Thereto the primary burner is inserted into the primary passage so that the primary injection end is positioned inside the primary passage upstream of the primary outlet opening or at said primary outlet opening.

The secondary injection unit has a secondary oxidant inlet and a multitude of secondary injectors. Each secondary injector terminates in a secondary injection end for the injection of the secondary oxidant into the combustion zone. Thereto, each secondary injector is inserted into one of the one or more secondary passages so that the secondary injection end of said secondary injector is positioned inside said secondary passage upstream the corresponding secondary outlet opening or at the secondary outlet opening of said secondary passage.

Other parts of the installation include:
∘ fuel piping which connects a fuel source to the fuel inlet of the burner assembly,
∘ primary oxidant piping which connects a source of primary oxidant to the primary oxidant inlet of the burner assembly, as well as
∘ secondary oxidant piping which connects a source of secondary oxidant to the secondary oxidant inlet of the burner assembly.

In accordance with the invention, the secondary oxidant piping includes, upstream of the secondary oxidant inlet of the burner assembly, a heating device for heating the secondary oxidant which is supplied by the secondary oxidant source. The heating device is preferably adapted to heat a flow of secondary oxidant to a temperature of at least 100°C.

Also in accordance with the invention, the burner assembly consists of an upper section situated above a horizontal plane and a lower section situated below said horizontal plane.

The primary inlet opening in the cold face is located on one side of a horizontal plane, referred to as the primary side.

The secondary inlet in the cold face of each of the one or more secondary passages is located on the other side of said horizontal plane, referred to as the secondary side.

The secondary injection unit is attached to the cold face on the secondary side of the horizontal plane and the primary injection unit is attached to the cold face on the primary side of the horizontal plane.

As a consequence, the primary burner or parts thereof can be removed from the primary passage and can be inserted into the primary passage via the primary inlet opening on the primary side without necessity to access the secondary side.

In accordance with the present invention, the "injection end" of a burner or of an injector designates the extremity of said burner or injector closest to the combustion zone when the burner or injector is installed in the chamber wall.

As will be explained in further detail hereafter, the possibility, in the context of a staged combustion burner, to access the primary burner away from the secondary side of the horizontal plane where the secondary injection unit is located is a major advantage of the present invention.

By having the secondary injection unit located above or below the primary injection unit, it is possible to create a compact staged combustion unit, i.e. a combustion unit that occupies only a small part of the wall. Compact burner units are often preferred when the available space is limited and/or because of their limited impact on the structural integrity of the wall in which they are installed.

For example, the burner assembly may be such that the primary inlet opening and the secondary inlet opening(s) are located within a rectangle on the cold face of the wall having a width and a height of not more than 4 times the diameter of the primary inlet opening, preferably of not more than 3 times the diameter of the primary inlet opening and/or such that the primary outlet opening and the secondary outlet opening(s) are located within a rectangle on the hot face of the wall having a width and a height of not more than 4 times the diameter of the primary outlet opening, preferably of not more than 3 times the diameter of the primary outlet opening.

According to a preferred embodiment of the invention, the primary side is located below the horizontal plane and the secondary side is located above the horizontal plane. An embodiment whereby the primary side is located above the secondary side is, for example, of interest for installations with combustion chambers for melting and/or refining glass and/or for transporting molten glass.

The fuel source is advantageously a source of a gaseous fuel, such as natural gas, syngas, methane, petroleum gas, etc.

The source of secondary oxidant may be a source of an oxidant containing less than 50%vol oxidant, preferably less than 25%vol oxidant. Preferably, the source of secondary oxidant is an air source, such as an air blower or an air compressor.

The source of primary oxidant is advantageously a source of an oxidant containing between 92%vol and 100% oxygen, such as, in particular an air separation unit, a reservoir of liquefied oxygen or a liquefied oxygen pipeline.

The source of primary oxidant may, for example, be a cryogenic air separation unit, a pressure swing adsorption air separation unit or a membrane air separation unit.

According to a preferred embodiment of the present invention, the source of primary oxidant is a source of an oxidant containing between 92%vol and 100% oxygen and the source of secondary oxidant is an air source.

Air is the most commonly used oxidant for combusting fuel. It has the advantage of being freely available. However, it has the disadvantage of consisting for over 70%vol of nitrogen which does not contribute to the combustion of fuel and which can lead to NOₓ formation during the combustion process.

Oxygen is a more efficient combustion oxidant. However, the cost of the oxygen can be a significant burden on the profitability of the combustion process.

A known compromise is the use of a combination of oxygen and air in industrial combustion processes. However, such a combination may lead to a significantly higher level of NOx generation, in particular of thermal NOx generation.

Staging the combustion process so that oxygen is injected with respect to the fuel in such a way as to generate a first fuel-rich primary oxycombustion flame and so that air is injected in such a way as to complete the combustion of the fuel in a separate secondary aircombustion stage helps to keep NOₓ formation within acceptable limits.

Burners designed for staged oxygen-air combustion are inter alia known from EP-A-0644374 and EP-A-0959299.

In the case of these known burners and installations, the fuel injector, the primary oxidant (oxygen) injector and the secondary oxidant (air) injector are concentric and are all located in the same passage of the furnace wall or burner block.

Consequently, if such burners were to be used for staged oxygen-air combustion with air preheated to at least 100°C, it is, for safety reasons, necessary to interrupt the preheated air supply to the burner before removing the fuel and/or primary oxidant injector for inspection, maintenance or replacement.

This means that during inspection, repair or maintenance work on the fuel and/or primary oxidant injector of such a staged combustion burner, the entire burner is switched off and no heat or gases are injected into the combustion zone by means of said staged combustion burner. Such a complete interruption of the heat and gas supply to the combustion zone obviously has a major disturbing effect on the heat and gas distribution inside the combustion zone.

With the burner assembly according to the present invention, however, a significant flow of gas (secondary oxidant) and, due to the preheating of the secondary oxidant, a non-negligible flow of heat can continue to be introduced into the combustion zone by means of the burner assembly, even when the primary burner is switched off for inspection, maintenance of repair.

In addition, as, in accordance with the present invention, it is possible to access the primary passage away from the one or more secondary passages and from the secondary injection unit, it is possible, when the primary burner has to be removed from the primary passage for a significant period of time, to insert a fuel lance into the primary passage during (part of) said period, for the injection of fuel to be combusted in the combustion zone with the preheated secondary oxidant (in the absence of the primary oxidant). In this manner, the heat and gas flow from the burner assembly into the combustion zone while the primary burner has been removed can be increased when compared to when only preheated secondary oxidant is injected by the burner assembly.

Finally, the present invention also allows to continue the combustion of fuel with the primary oxidant by means of the primary burner when the secondary injectors are switched off, for example for inspection, maintenance or repair of the secondary injectors, of the heating device or of the blower or compressor used as the secondary oxidant source.

The heating device included in the secondary oxidant piping of the installation according to the invention may be of any type suitable for preheating the secondary oxidant. The heating device may, for example, comprise a heat exchanger for heating the secondary oxidant by heat exchange with a heat-carrying fluid. Said heating device is advantageously a waste heat recovery device, i.e. a device using available waste heat to preheat the secondary oxidant. The heating device advantageously heats the secondary oxidant by means of heat exchange with off-gas coming from the combustion chamber, i.e. which has been evacuated from the combustion zone in which the staged combustion of the fuel takes place. Such heat exchange between the off-gas and the secondary oxidant may be direct (i.e. with the off-gas and the secondary oxidant flowing on opposite sides of a heat exchange surface (of a heat exchanger)). The heat exchange between the off-gas and the secondary oxidant may also be indirect (i.e. with an intermediate heat transfer fluid between the stream of off-gas and the stream of secondary oxidant.

The fuel and/or the primary oxidant may be supplied to the burner assembly at ambient temperature or may also be preheated to a higher temperature.

When the burner assembly according to the present invention comprises a single secondary passage, all of the multiple secondary injectors are inserted into said secondary passage so that the secondary injection end of each secondary injector is positioned no further than the secondary outlet opening of the single secondary passage, i.e. either upstream of or at the secondary outlet opening of the secondary passage.

When the burner assembly according to the present invention comprises more than one secondary passage, only one secondary injector is preferably inserted in each secondary passage in the manner described above.

The injection ends of the secondary injectors are preferably located upstream of the secondary outlet opening of the corresponding secondary passage. In this manner, the metallic injector is protected to a smaller or greater degree against inter alia heat radiation from inside the combustion zone.

Likewise, the injection end of the primary burner is advantageously located upstream of the primary outlet opening of the primary passage.

The secondary outlet opening(s) and the secondary injectors are preferably positioned with respect to the primary outlet opening so that, in operation, the secondary injectors inject secondary oxidant into the combustion zone both on the left and on the right of a vertical plane through the primary passage and perpendicular to the hot face of the wall at the primary outlet opening.

The primary passage and/or the one or more secondary passages may be horizontal or at a narrow angle (<90°, preferably ≤ 60° and more preferably ≤ 30°) to the horizontal.

The secondary injectors and passage(s) are preferably positioned for the injection of the secondary oxidant into the combustion zone according to a plane, herein referred to as the "secondary plane". The location and intensity of the secondary combustion can then be influenced by the orientation of the primary burner with respect to the secondary plane. For example, the primary burner may be positioned so as to generate a primary flame of the fuel with the primary oxidant parallel to the secondary plane.

Alternatively, the primary burner may be positioned so as to generate a primary flame of the fuel with the primary oxidant directed so as to intersect with the secondary plane inside the combustion zone, i.e. downstream of the hot face.

The primary passage and the one or more secondary passages of the burner assembly may be located within one or more dedicated burner blocks which have been installed in the wall. All of said passages may be located in a single burner block. Alternatively, the primary passage may be located in a first block and the one or more secondary passages may be located in a second block. In that case, the horizontal plane separating the primary side from the secondary side may coincide with the contact surface between the first and second block.

The primary burner may be a premix burner, i.e. a burner whereby the fuel and the (primary) oxidant are mixed within the burner before being injected into the combustion zone.

The primary burner may also be a pipe-in-pipe burner, whereby one of the fuel and the primary oxidant are injected by means of a central pipe and whereby the other of the fuel and the primary oxidant are injected through an annular space between the central pipe and a surrounding pipe.

The primary burner may advantageously also be a tritube burner of the type described in EP-A-0763692, thus providing more flexibility in the operation of the installation of the invention and in the properties of the primary flame.

As indicated earlier, the injection end of such a burner corresponds to the downstream extremity of the burner, even when the burner comprises injection openings located further upstream in the burner.

For further protection against the high temperature of the secondary oxidant, a physical barrier may be provided between, on the one hand, the fuel inlet and the primary oxidant inlet and, on the other hand, the secondary oxidant inlet. Such a physical barrier may include insulating material surrounding the secondary oxidant inlet and/or a screen positioned between the secondary oxidant inlet and the other inlets.

The present invention is already advantageous for combustion chambers with a single burner assembly, but its advantages are more pronounced when the combustion chamber contains several or even a large number of such burner assemblies.

According to one embodiment of the installation, the wall presents not one but a multitude of burner assemblies as described above. In that case, the burner assemblies may, in particular, be arranged in one or more rows, for example along the length of the wall. Such arrangements are common in side-fired glass-melting and/or refining chambers and in glass feeders, i.e. chambers for the transport of molten glass.

In that case:
- at least some and optionally all of the burner assemblies may be connected to a same source of fuel by means of the fuel piping; and/or
- at least some and optionally all of the burner assemblies may be connected to a same source of primary oxidant by means of the primary oxidant piping; and/or
- at least some and optionally all of the burner assemblies may be connected to a same source of secondary oxidant by means of the secondary oxidant piping.

It is a disadvantage of using preheated secondary oxidant, such as preheated air, that the flow control of hot oxidant places higher demands on the heat, oxidation and corrosion resistance of the equipment used for controlling the flow of the preheated oxidant, in particular, on the heat, oxidation and corrosion resistance of flow control valves.

These demands increase with increasing oxidant temperatures, starting from about 100°C. More specifically, air temperatures above 200°C usually require special alloys are so that the costs of the valves increase significantly and the oxidation and corrosion resistance requirements for the valves are generally prohibitive for air temperatures above 600°C.

These material requirements can be particularly problematic in furnaces comprising a large number of burners using preheated secondary oxidant and whereby the supply of preheated secondary oxidant to the burner must be interrupted in order to allow maintenance work on the fuel and primary oxidant injectors.

Providing each of the individual burners with a shut-off valve for preheated secondary oxidant can be too costly and raises additional reliability and maintenance issues in direct connection with said valves.

Said costs, reliability and maintenance issues could be overcome by providing a single shut-off valve to shut off the supply of preheated secondary oxidant to all of the burners, whereby said shut-off valve is preferably located at a point in the secondary oxidant piping upstream of the heating device. However, in that case, the supply of preheated secondary oxidant to all of the burners downstream of said shut-off valve is interrupted as soon as one of the burners needs to be switched off for inspection, maintenance or repair. It will be appreciated that this significantly exacerbates the disturbing effect on the gas and heat flow into the combustion zone, as described earlier with respect to a single burner.

With the installation according to the present invention, however, it is possible to continue to supply preheated secondary oxidant to the combustion zone by means of all of the burner assemblies downstream of such a shut-off valve, even when the primary burner of one or more of said burner assemblies is turned off for inspection, maintenance or repair.

Thereto, in an installation whereby the combustion chamber comprises multiple burner assemblies connected to the source of secondary oxidant as described above and in particular whereby the wall presents a multitude of such burner assemblies, the secondary oxidant piping of the installation advantageously comprises a shut-off valve capable of interrupting the supply of secondary oxidant from the source of secondary oxidant to several of the burner assemblies. Said shut-off valve may be located downstream of the heating device, i.e. after the secondary oxidant has been preheated. However, when the shut-off valve is located upstream of the heating device, i.e. before the secondary oxidant has been preheated, there is no need to use a valve specifically designed to control the flow of preheated oxidant.

The installation according to the invention can be used for a wide range of applications. The combustion chamber may, for example, be an incineration chamber, such as a waste incineration chamber, an annealing chamber, such as a metal or glass annealing chamber, a reheating chamber, as for example used to reheat metal upstream of a lamination installation, a tunnel kiln, a melting chamber, a refining chamber, a combined melting-refining chamber or a melt transport canal.

The invention is particularly useful for installations whereby the combustion chamber is a glass or metal melting chamber, a glass or metal refining chamber, a combined glass or metal melting-refining chamber or a glass or metal melt transport canal.

The present invention also covers the use of the installation to generate a staged combustion of fuel with a primary and a secondary oxidant.

The present invention thus also relates to a method for the staged combustion of fuel with a primary and a secondary oxidant using an installation according to any one of the embodiments described above. According to said method:
- fuel is transported from the fuel source to the fuel inlet of the burner assembly via the fuel piping,
- primary oxidant is transported from the source of primary oxidant to the primary oxidant inlet via the primary oxidant piping,
- secondary oxidant is transported by the secondary oxidant piping from the source of secondary oxidant to the heating device.

In the heating device, the secondary oxidant is preheated to a temperature of at least 100°C. Thereafter, the preheated secondary oxidant generated by the heating device is transported by the secondary oxidant piping to the secondary oxidant inlet of the burner assembly.

From the fuel inlet, respectively the primary oxidant inlet of the burner assembly, the fuel and the primary oxidant are injected into the combustion zone by means of the primary burner of the burner assembly so as to partially combust the fuel with the primary oxidant in a primary flame in the combustion zone.

From the secondary oxidant inlet, the preheated secondary oxidant is injected into the combustion zone by means of the secondary injectors of the burner assembly so as to complete the combustion of the fuel with secondary oxidant in a separate secondary combustion stage in the combustion zone.

In accordance with the present invention, the supply of fuel and primary oxidant to the burner assembly is interrupted during maintenance or repair work on the primary burner of the burner assembly, however the supply of preheated secondary oxidant to the burner assembly and the injection of said preheated secondary oxidant into the combustion zone by means of the secondary injectors of the burner assembly are continued during said maintenance or repair work, while still allowing safe access to the primary burner and/or passage of the assembly. As a consequence, a certain amount of heat continues to be supplied by the burner assembly to the combustion zone in the form of the flow of preheated secondary oxidant and a certain gas flow continues to be supplied by the burner assembly to the combustion zone also in the form of the flow of preheated secondary oxidant. The impact of the maintenance or repair work on the operation of the combustion chamber, including on the pressure and gas flows inside the combustion zone, is thus substantially limited.

The higher the temperature to which the secondary oxidant is preheated, the higher the amount of heat which is supplied by the assembly to the combustion chamber during the maintenance or repair work. Consequently, the secondary oxidant is advantageously preheated to a temperature between 200°C and 800°C, preferably to a temperature between 500°C and 750°C. As indicated earlier, a fuel lance may be temporarily used to inject fuel into the combustion zone via the primary passage while the primary burner has been removed from said primary passage.

When waste heat from the combustion chamber is used to preheat the secondary oxidant, the thermal efficiency of the method is improved. According to a preferred embodiment, hot off-gas is evacuated from the combustion zone and supplied to the heating device for the heating of the secondary oxidant by direct or indirect heat exchange with the evacuated hot off-gas.

As indicated earlier, the present invention is particularly useful when the combustion chamber comprises a multitude of the burner assemblies.

The invention thus also includes a method whereby secondary oxidant is transported by the secondary oxidant piping from the source of secondary oxidant to the heating device where the secondary oxidant is preheated. The preheated secondary oxidant is then transported by the secondary oxidant piping to the secondary oxidant inlet of the burner assemblies of a set of burner assemblies in the wall of the combustion chamber. During maintenance or repair work on the primary burner of one of the burner assemblies of the set, the supply of fuel and primary oxidant to said burner assembly is interrupted to allow safe access to said primary burner. However, the supply of preheated secondary oxidant to all of the burner assemblies of the set and the injection of said preheated secondary oxidant into the combustion zone by means of the secondary injectors of the burner assemblies of the set are continued during the maintenance or repair work on the primary burner of the individual burner assembly of the set.

The present invention and its advantages are illustrated in more detail in the following example, reference being made to figures 1 to 3 whereby:
- figure 1 is a partial schematic perspective view of an installation according to the present invention with multiple burner assemblies,
- figure 2 is a schematic rear view of a burner assembly for use in the present invention,
- figure 3 is a schematic cross section view of the burner block of the burner assembly of figure 2: according to vertical plane IIa-IIa in the lower part of the figure and according to vertical plane IIb-IIb in the upper part of the figure.

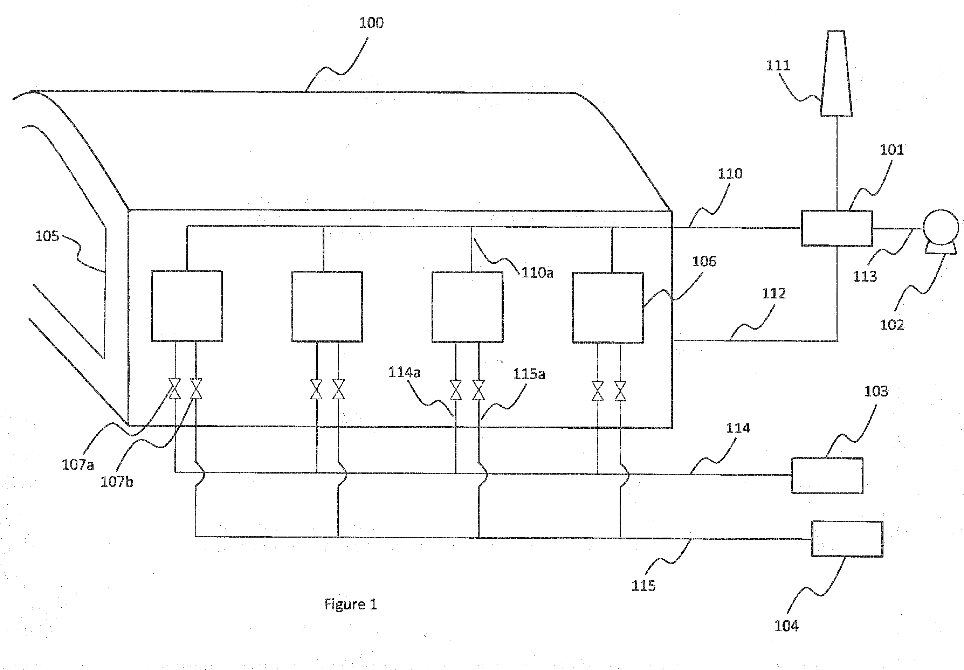

The installation shown in figure 1 comprises a combustion chamber 100 defining a combustion zone therein. The combustion chamber 100 is, for example, a glass melting chamber or an aluminium melting chamber.

One wall 200 of the combustion chamber 100 is shown in figure 1. Said wall 200 has a hot face 201 facing the combustion zone and a cold face 202 facing away from the combustion zone.

A number of burner assemblies 106 are arranged in a horizontal row in said wall 100. Four burner assemblies 106 are represented in figure 1, but for some applications the wall 100 may comprise a substantially larger number of said burner assemblies 106.

Fuel piping 115 connects a reservoir of natural gas 104 to every one of the burner assemblies 106 by means of branch pipes 115a.

Primary oxidant piping 114 connects a reservoir of liquid oxygen 103 to every one of the burner assemblies 106 by means of branch pipes 114a.

Finally, secondary oxidant piping 113, 110 connects a variable speed compressor or blower (fan) 102 of air or oxygen-enriched air to every one of the burner assemblies 106 by means of branch pipes 110a. By changing the speed of blower 102 the amount of secondary oxidant supplied to the set of burner assemblies 106 by means of piping 113, 110 can be varied. At blower speed zero, the supply of secondary oxidant to the burner assemblies 106 is interrupted. Alternatively, compressor or blower 102 may be a constant speed compressor or blower and the flow of secondary oxidant through piping 113, 110 may be controlled by means of one or more valves.

Primary oxidant piping 114 presents a primary oxidant valve 107a in branch pipes 114a upstream of each burner assembly 106. Likewise, fuel piping 115 presents a fuel valve 107b in branch pipes 115a upstream of each burner assembly 106. This allows the independent control of the supply of fuel and of primary oxidant to each individual burner assembly 106. Valves 107a, 107b may be on/off valves or may allow a gradual control of the gas flows to the downstream burner assembly106.

Secondary oxidant piping 113, 110 includes a heating device 101 for heating the secondary oxidant supplied by blower 102 upstream of the burner assemblies 106. In the illustrated embodiment, heating device 101 is a gas/gas heat exchanger in which hot off-gas 112 from the combustion chamber 100 is used to heat the secondary oxidant supplied by blower 102 by direct or indirect heat exchange between the two. The cooled off-gas leaving heat exchanger 101 is sent to stack 111. The heated secondary oxidant is transported from heat exchanger 101 to the different burner assemblies 106 by means of thermally insulated secondary oxidant piping 110. In this manner the energy efficiency of the installation is improved in that part of the generally substantial waste heat present in off-gas 112 is recovered and reintroduced into combustion chamber 100.

Heating device 101 is designed so as to heat the secondary oxidant to a temperature of at least 100°C. In order to maximize the recovery of waste heat form the off-gas, heat exchanger 101 heats the secondary oxidant to 650°C.

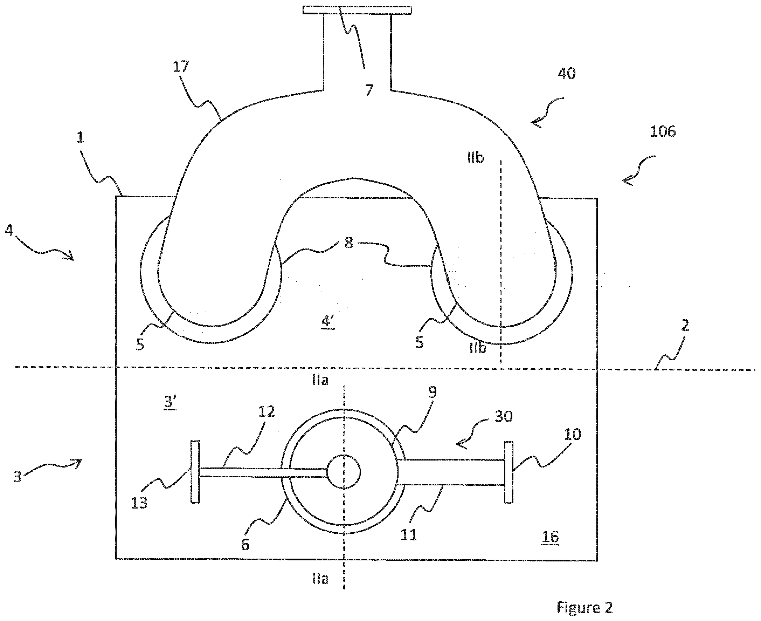

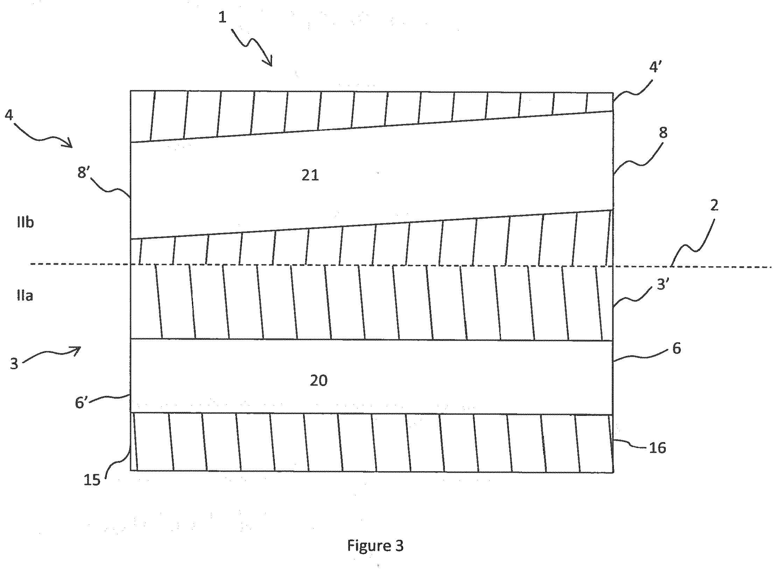

A suitable burner assembly 106 and the manner in which such a burner assembly can be connected to the fuel, primary oxidant and secondary oxidant pipings 115, 114, 110 are shown in figures 2 and 3.

The burner assembly 106 comprises a refractory burner block 1, for example made out of AZS or alumina.

Burner block 1 extends between a burner cold face 16 on the side of the cold face 202 of wall 200 and a burner hot face 15 on the side of the hot face 201 of wall 200.

A primary passage 20 extends from a primary inlet opening 6 the cold face 16 to a primary outlet opening 6' in the hot face 15.

In the illustrated embodiment, the primary inlet opening 6 and the entire primary passage 20 are located below a horizontal plane 2, i.e. in the primary section 3 of the burner assembly 106.

The secondary inlet openings 8 and the entire secondary passages 21 are located above said horizontal plane 2, i.e; in the secondary section 4 of burner assembly 106. Similarly, the part 3' of cold face 16 below horizontal plane 2 is referred to as the primary side and the part 4' of cold face 16 above horizontal plane 2 is referred to as the secondary side.

The primary inlet opening 6 is thus located on the primary side 3' and the secondary inlet openings 8 on the secondary side 4'.

As shown in the figures, horizontal plane 2 is a virtual plane in burner block 1. Horizontal plane 2 may, however also be a material plane. For example, primary section 3 may constitute a first partial burner block containing the primary passage 20 and the secondary section 4 may constitute a second partial burner block containing the two secondary passages 21, horizontal plane 2 forming the contact surface between the two partial burner blocks of the burner assembly.

In the illustrated embodiment, primary passage 20 is horizontal and secondary passages 21 are downwardly inclined from cold face 16 towards hot face 15. The axes of the two secondary passages 21 define a plane (the secondary plane) which intersects the axis of the primary passage 20 downstream of hot face 15.

As shown in figure 2, the burner assembly 106 includes a metallic primary injection unit 30 which is attached to the primary side 3' of cold face 16.

The primary injection unit 30 comprises a primary burner 9 with a central fuel injector which is surrounded by a concentric primary oxidant injector. Other types of primary burners may also be used. In burner assembly 106, primary burner 9 is inserted in primary passage 20 via primary inlet opening 6 and this in such a way that the injection end of primary burner 9 (primary injection end, not shown) is located inside primary passage 20 upstream of primary outlet opening 6'.

The primary injection unit 30 has a fuel inlet 13 which is connected to fuel piping 115 by means of a flange so as to enable the supply of gaseous fuel from fuel source 104 to the primary burner 9 and more specifically to the fuel injector of same via tube 12.

The primary injection unit 30 also has a primary oxidant inlet 10 which is connected to primary oxidant piping 110 by means of a further flange so as to enable the supply of primary oxidant from primary oxidant source 103 to the primary burner 9 and more specifically to the primary oxidant injector of same via tube 11.

In normal operation of burner assembly 106, primary burner 9 injects fuel and primary oxidant into the combustion zone via primary passage 20 so as to generate a fuel-rich primary oxy-fuel flame in which the fuel is partially combusted.

In the illustrated embodiment, all of the burner assemblies are connected to a same fuel source by the same fuel piping. In some cases, a combustion chamber may comprise burner assemblies which are connected to different fuel sources by means of different fuel pipings.

The burner assembly 106 also includes a separate metallic secondary injection unit 40 which is attached to the secondary side 4' of cold face 16.

Secondary injection unit 40 comprises two secondary oxidant injectors 5. Each secondary oxidant injector 5 is inserted in one of the two secondary passages 21 via the corresponding secondary inlet opening 8 and this in such a way that the injection end (not shown) of the secondary oxidant injector 5 is positioned inside the secondary passage 21 upstream of the secondary outlet opening 8'.

Secondary injection unit 40 presents an inlet for secondary oxidant 7 which is connected to secondary oxidant piping 110 by means of a flange. In normal operation of the burner assembly, secondary oxidant which has been heated in heating device 101 is supplied by secondary oxidant piping 110 to secondary oxidant inlet 7 and is then divided, by means of forked tube 17 over the two secondary injectors 5 so that two jets of preheated secondary oxidant are injected into the combustion zone via the two secondary passages 21. By means of said secondary oxidant jets, secondary combustion is generated which completes the combustion of the fuel in the combustion zone.

Even though the illustrated burner assembly 106 presents only two secondary oxidant injectors 5, a burner assembly with more than two secondary oxidant injectors may be used. Likewise, even though the illustrated burner assembly 106 presents two secondary passages 21, a burner assembly with only one or more than two secondary passages may be used

As burner assembly 106 is designed for staged combustion, NOx levels can be maintained at an acceptable level even when oxygen is used as the primary oxidant and preheated air as the secondary oxidant.

Forked tube 17 is preferably thermally insulated. The materials of the primary and secondary injection units 30, 40 are selected in function of the nature of the fluids (fuel, primary and secondary oxidant, the temperature of the fluids, and the conditions in the combustion zone). Suitable materials may be stainless steel, carbon steel or inconel.

During normal operation, the primary oxidant typically supplies 35 to 87% of the oxygen molecules used for the complete combustion of the fuel, with the preheated secondary oxidant (typically air) providing the remainder of the oxygen molecules. Due to the significantly lower oxygen concentration of the secondary oxidant (compared to the primary oxidant) the amount of secondary oxidant injected by the burner assembly 106 is significant, even at higher primary oxidant levels.

The layout of the burner assembly 106 on the cold side 202 is such that it is possible to conduct maintenance or repair work on one of the primary and secondary injection units 30, 40 without requiring interference with (the operation of) the other of the two injection units 40, 30 of the same burner assembly 106.

As a consequence it is possible, in accordance with the present invention, to continue to inject preheated secondary oxidant into the combustion zone by means of the burner assembly 106 even when the operation of the primary burner 9 needs to be interrupted, for example in order to conduct maintenance or repair work on the primary burner 9. In this manner, the burner assembly 106 can continue to inject a certain level of gas and energy into the combustion zone even when the primary burner 9 is inactive. As a consequence, it is not essential to be able to switch off the secondary oxidant supply to the individual burner assemblies 106 of the installation and so that valves for the control of the supply of preheated secondary oxidant to the individual burner assemblies are no longer strictly required. Such valves may, however, be provided for extra security.

When a fuel lance is inserted into the primary passage 20 while the primary burner 9 has been removed therefrom, a certain level of combustion can be maintained by means of the burner assembly 106 using secondary oxidant only.

Should, for some reason, the supply of secondary oxidant to burner assembly 106 be interrupted 10 (for example due to maintenance work on blower 102 or heating device 101) the primary burner may operate on its own, i.e. combusting the fuel with the primary oxidant only.

A person skilled in the art knows how to adjust the fuel and oxidant flows during each of the above combustion modes.

By means of the present example, it has been demonstrated that the present invention allows staged combustion of a fuel with an oxygen-rich primary oxidant and an oxygen-leaner secondary oxidant, whereby said secondary oxidant has been preheated (preferably by means of waste heat from the combustion process) and whereby said installation moreover allows safe maintenance and repair work on the injector unit used for the injection of fuel and primary oxidant (or alternatively on the injector unit used for the injection of secondary oxidant) without the need to entirely interrupt the operation of the burner assembly in question. This provides for increased operation flexibility and, more importantly, for increased efficiency of the installation, in particular for those processes, such as glass and metal melting, whereby frequent maintenance and repair work on the burner assemblies is required, whereby in addition, the burner assemblies may be compact burner assemblies.

## Claims

1. Installation for the staged combustion of a fuel with two different oxidants: a primary oxidant and a secondary oxidant, the installation comprising a combustion chamber (100) defining a combustion zone therewithin, the combustion chamber (100) comprising a floor, a roof and a refractory wall (200) having a hot face (201) on the side of the combustion zone and a cold face (202) on the opposite side, the wall (200) containing a burner assembly (106) for the injection of the fuel, the primary oxidant and the secondary oxidant into the combustion zone, the burner assembly (106) comprising:
∘ a primary passage (20) extending from a primary inlet opening (6) in the cold face (202) to a primary outlet opening (6') in the hot face (201),
∘ one or more secondary passages (21), each secondary passage (21) extending from a secondary inlet opening (8) in the cold face (202) to a secondary outlet opening (8') in the hot face (201), each secondary passage (21) being spaced apart from the primary passage (20) of the burner assembly (106),
∘ a metallic primary injection unit (30) having a fuel inlet (13) for the fuel, a primary oxidant inlet (10) for the primary oxidant and a primary burner (9) terminating in a primary injection end for the injection of the fuel and the primary oxidant into the combustion zone, the primary burner (9) being inserted into the primary passage (20) so that the primary injection end is positioned upstream of or at the primary outlet opening (6') of said primary passage (20), and
∘ a separate metallic secondary injection unit (40) having a secondary oxidant inlet (7) for the secondary oxidant and a multitude of secondary injectors (5), each secondary oxidant injector (5) terminating in a secondary injection end for the injection of the secondary oxidant into the combustion zone, each secondary oxidant injector (5) being inserted into one of the at least one secondary passages (21) so that the secondary injection end of said secondary oxidant injector (5) is positioned upstream of or at the secondary outlet opening (8') of the secondary passage (21) into which the secondary injector (5) extends, the installation further comprising:
∘ fuel piping (115) connecting a fuel source (104) to the fuel inlet (13),
∘ primary oxidant piping (114) connecting a source of primary oxidant (103) to the primary oxidant inlet (10), and
∘ secondary oxidant piping (113, 110) connecting a source of secondary oxidant (102) to the secondary oxidant inlet (7), wherein
∘ the secondary oxidant piping (113, 110) includes a heating device (101) for heating the secondary oxidant supplied by the secondary oxidant source (102) upstream of the secondary oxidant inlet (7), the heating device (101) being adapted to heat a flow of secondary oxidant to a temperature of at least 100°C,
∘ the burner assembly (106) consists of an upper section situated above a horizontal plane (2) and a lower section situated below said horizontal plane (2), whereby:
∘ the primary inlet opening (6) in the cold face (202) is located on one side of a horizontal plane (2), referred to as the primary side (3'), and the secondary inlet opening (8) of the one or more secondary passages (21) is located in the cold face (202) on the other side (4') of said horizontal plane (2), referred to as the secondary side,
o the secondary injection unit (40) is attached to the cold face (202) on the secondary side (4') of the horizontal plane (2) and
∘ the primary injection unit (30) is attached to the cold face (202) on the primary side (3') of the horizontal plane (2) so that the primary burner (9) or parts thereof can be removed from the primary passage (20) and can be inserted into the primary passage (20) via the primary inlet opening (8) on the primary side (3') without necessity to access the secondary side (4')..

2. Installation according to claim 1, whereby the primary side (3') is located below the horizontal plane (2) and the secondary side (4') is located above the horizontal plane (2).

3. Installation according to claim 1 or 2, whereby the fuel source (104) is a source of a gaseous fuel.

4. Installation according to any one of the preceding claims, whereby the source of primary oxidant (103) is a source of an oxidant containing between 92%vol and 100% oxygen.

5. Installation according to any one of the preceding claims, whereby the source of secondary oxidant (102) is a source of an oxidant containing less than 50%vol oxidant, preferably less than 25%vol oxidant.

6. Installation according to claim 5, whereby the source of secondary oxidant (102) is an air blower or an air compressor.

7. Installation according to any one of the preceding claims, whereby the heating device (101) is a waste heat recovery device.

8. Installation according to claim 7, whereby the heating device comprises (101) a heat exchanger for heating up the secondary oxidant by heat exchange with a heat-carrying fluid, preferably with off-gas (112) from the combustion chamber (100).

9. Installation according to any one of the preceding claims whereby the wall (200) presents a multitude of the burner assemblies (106), each one of said burner assemblies (106) being connected to the source of secondary oxidant (102) by the secondary oxidant piping (113, 110).

10. Installation according to claim 9, whereby the secondary oxidant piping (110, 113) comprises a shut-off valve capable of interrupting the supply of secondary oxidant from the source of secondary oxidant (102) to several of the burner assemblies (106).

11. Installation according to any one of the preceding claims, whereby the combustion chamber (200) is an incineration chamber, an annealing chamber, a reheating chamber, a calcination chamber, a melting chamber, a refining chamber, a combined melting-refining chamber or a melt transport canal.

12. Installation according to claim 11, whereby the combustion chamber is a glass or metal melting chamber, refining chamber, combined melting-refining chamber or melt transport canal.

13. Method for the staged combustion of fuel with a primary and a secondary oxidant using an installation according to any one of the preceding claims, whereby:
• the fuel is transported from the fuel source (104) to the fuel inlet (13) of the burner assembly (106) via the fuel piping (115),
• the primary oxidant is transported from the source of primary oxidant (103) to the primary oxidant inlet (10) via the primary oxidant piping (114),
• the secondary oxidant is transported by the secondary oxidant piping (113) from the source of secondary oxidant (102) to the heating device (101) where the secondary oxidant is preheated to a temperature of at least 100°C and the preheated secondary oxidant is transported by the secondary oxidant piping (110) to the secondary oxidant inlet (7),
• the fuel and the primary oxidant are injected into the combustion zone by means of the primary burner (9) of the burner assembly (106) so as to partially combust the fuel with the primary oxidant in a primary flame in the combustion zone,
• the preheated secondary oxidant is injected into the combustion zone by means of the secondary injectors (5) of the burner assembly (106) so as to complete the combustion of the fuel with secondary oxidant in a separate secondary combustion stage in the combustion zone, and whereby,
• during maintenance or repair work on the primary burner (9) of the burner assembly (106), the supply of fuel and primary oxidant to the burner assembly (106) is interrupted, whereas the supply of preheated secondary oxidant to the burner assembly (106) and the injection of said preheated secondary oxidant into the combustion zone by means of the secondary injectors (5) of the burner assembly (106) are continued.

14. Method according to claim 13, whereby the secondary oxidant is preheated to a temperature between 200°C and 800°C, preferably to a temperature between 500°C and 750°C.

15. Method according to any one of claims 13 and 14, whereby hot-off gas (112) is evacuated from the combustion chamber (100) and supplied to the heating device (101) for the heating of the secondary oxidant by direct or indirect heat exchange with the evacuated hot off-gas (112).

## Patentansprüche

1. Anlage zur gestuften Verbrennung eines Brennstoffs mit zwei unterschiedlichen Oxidationsmitteln:
einem Primäroxidationsmittel und einem Sekundäroxidationsmittel, wobei die Anlage eine Verbrennungskammer (100) umfasst, die eine Verbrennungszone darin definiert, wobei die Verbrennungskammer (100) einen Boden, ein Dach und eine hitzebeständige Wand (200) mit einer heißen Fläche (201) auf der Seite der Verbrennungszone und einer kalten Fläche (202) auf der Gegenseite aufweist, wobei die Wand (200) eine Brenneranordnung (106) zur Injektion des Brennstoffs, des Primäroxidationsmittels und des Sekundäroxidationsmittels in die Verbrennungszone umfasst, wobei die Brenneranordnung (106) umfasst:
∘ einen Primärdurchgang (20), der sich von einer Primäreinlassöffnung (6) in der kalten Fläche (202) zu einer Primärauslassöffnung (6') in der heißen Fläche (201) erstreckt,
∘ einen oder mehrere Sekundärdurchgänge (21), wobei jeder Sekundärdurchgang (21) sich von einer Sekundäreinlassöffnung (8) in der kalten Fläche (202) zu einer Sekundärauslassöffnung (8') in der heißen Fläche (201) erstreckt, wobei jeder Sekundärdurchgang (21) von dem Primärdurchgang (20) der Brenneranordnung (106) beabstandet ist,
∘ eine metallische Primärinjektionseinheit (30) mit einem Brennstoffeinlass (13) für den Brennstoff, einem Primäroxidationsmitteleinlass (10) für das Primäroxidationsmittel und einem Primärbrenner (9), der in einem Primärinjektionsende zur Injektion des Brennstoffs und des Primäroxidationsmittels in die Verbrennungszone endet, wobei der Primärbrenner (9) so in den Primärdurchgang (20) eingesetzt wird, dass das Primärinjektionsende vorgeordnet zu oder an der Primärauslassöffnung (6') des Primärdurchgangs (20) positioniert ist, und
∘ eine separate metallische Sekundärinjektionseinheit (40) mit einem Sekundäroxidationsmitteleinlass (7) für das Sekundäroxidationsmittel und einer Vielzahl von Sekundärinjektoren (5), wobei jeder Sekundäroxidationsmittelinjektor (5) in einem Sekundärinjektionsende zur Injektion des Sekundäroxidationsmittels in die Verbrennungszone endet, wobei jeder Sekundäroxidationsmittelinjektor (5) in einen von den mindestens einen Sekundärdurchgängen (21) eingesetzt wird, so dass das Sekundärinjektionsende des Sekundäroxidationsmittelinjektors (5) vorgeordnet zu oder an der Sekundärauslassöffnung (8') des Sekundärdurchgangs (21) positioniert ist, in den sich der Sekundärinjektor (5) erstreckt,
wobei die Anlage des Weiteren umfasst:
∘ Brennstoffleitung(en) (115), die eine Brennstoffquelle (104) mit dem Brennstoffeinlass (13) verbindet bzw. verbinden,
∘ Primäroxidationsmittelleitung(en) (114), die eine Quelle für Primäroxidationsmittel (103) mit dem Primäroxidationsmitteleinlass (10) verbindet bzw. verbinden, und
∘ Sekundäroxidationsmittelleitung(en) (113, 110), die eine Quelle für Sekundäroxidationsmittel (102) mit dem Sekundäroxidationsmitteleinlass (7) verbindet bzw. verbinden, wobei
∘ die Sekundäroxidationsmittelleitung(en) (113, 110) eine Heizvorrichtung (101) zum Erwärmen des Sekundäroxidationsmittels einschließt bzw. einschließen, das durch die Sekundäroxidationsmittelquelle (102) vorgeordnet zu dem Sekundäroxidationsmitteleinlass (7) zugeführt wird, wobei die Heizvorrichtung (101) eingerichtet ist, um den Fluss des Sekundäroxidationsmittels auf eine Temperatur von mindestens 100 °C zu erwärmen,
∘ die Brenneranordnung (106) aus einem oberen Segment, das sich oberhalb einer Horizontalebene (2) befindet, und einem unteren Segment besteht, das sich unterhalb der Horizontalebene (2) befindet, wobei:
∘ die Primäreinlassöffnung (6) in der kalten Fläche (202) sich auf einer Seite einer Horizontalebene (2) befindet, die als die Primärseite (3') bezeichnet wird, und die Sekundäreinlassöffnung (8) des einen oder der mehreren Sekundärdurchgänge (21) sich in der kalten Fläche (202) auf der anderen Seite (4') der Horizontalebene (2) befindet, die als die Sekundärseite bezeichnet wird,
∘ die Sekundärinjektionseinheit (40) an der kalten Fläche (202) auf der Sekundärseite (4') der Horizontalebene (2) befestigt ist, und
∘ die Primärinjektionseinheit (30) an der kalten Fläche (202) auf der Primärseite (3') der Horizontalebene (2) befestigt ist, so dass der Primärbrenner (9) oder Teile davon aus dem Primärdurchgang (20) entfernt werden kann bzw. können und über die Primäreinlassöffnung (8) auf der Primärseite (3') in den Primärdurchgang (20) eingesetzt werden kann bzw. können, ohne auf die Sekundärseite (4') zugreifen zu müssen.

2. Anlage nach Anspruch 1, wobei die Primärseite (3') sich unterhalb der Horizontalebene (2) befindet und die Sekundärseite (4') sich oberhalb der Horizontalebene (2) befindet.

3. Anlage nach Anspruch 1 oder 2, wobei die Brennstoffquelle (104) eine Quelle eines gasförmigen Brennstoffs ist.

4. Anlage nach einem der vorhergehenden Ansprüche, wobei die Quelle des Primäroxidationsmittels (103) eine Quelle eines Oxidationsmittels ist, das zwischen 92 Vol.% und 100 Vol.% Sauerstoff enthält.

5. Anlage nach einem der vorhergehenden Ansprüche, wobei die Quelle des Sekundäroxidationsmittels (102) eine Quelle eines Oxidationsmittels ist, die weniger als 50 Vol.% Oxidationsmittel, vorzugsweise weniger als 25 Vol.% Oxidationsmittel enthält.

6. Anlage nach Anspruch 5, wobei die Quelle des Sekundäroxidationsmittels (102) ein Luftgebläse oder ein Luftkompressor ist.

7. Anlage nach einem der vorhergehenden Ansprüche, wobei die Heizvorrichtung (101) eine Abwärmerückgewinnungsvorrichtung ist.

8. Anlage nach Anspruch 7, wobei die Heizvorrichtung (101) einen Wärmetauscher zum Aufwärmen des Sekundäroxidationsmittels durch Wärmetausch mit einem wärmetragenden Fluid umfasst, vorzugsweise mit Abgas (112) aus der Verbrennungskammer (100).

9. Anlage nach einem der vorhergehenden Ansprüche, wobei die Wand (200) eine Vielzahl der Brenneranordnungen (106) darstellt, wobei jede der Brenneranordnungen (106) über die Sekundäroxidationsmittelleitung(en) (113, 110) mit der Quelle für Sekundäroxidationsmittel (102) verbunden ist.

10. Anlage nach Anspruch 9, wobei die Sekundäroxidationsmittelleitung(en) (110, 113) ein Absperrventil umfasst bzw. umfassen, das in der Lage ist, die Zufuhr des Sekundäroxidationsmittels von der Quelle des Sekundäroxidationsmittels (102) zu mehreren der Brenneranordnungen (106) zu unterbrechen.

11. Anlage nach einem der vorhergehenden Ansprüche, wobei die Verbrennungskammer (200) eine Veraschungskammer, eine Temperkammer, eine Wiedererwärmungskammer, eine Calcinierungskammer, eine Schmelzkammer, eine Läuterkammer, eine kombinierte Schmelz-Läuterkammer oder ein Schmelztransportkanal ist.

12. Anlage nach Anspruch 11, wobei die Verbrennungskammer eine Glas- oder Metallschmelzkammer, Läuterkammer, kombinierte Schmelz-Läuterkammer oder ein Schmelztransportkanal ist.

13. Verfahren zur gestuften Verbrennung von Brennstoff mit einem Primär- und einem Sekundäroxidationsmittel unter Verwendung einer Anlage nach einem der vorhergehenden Ansprüche, wobei:
• der Brennstoff aus der Brennstoffquelle (104) über die Brennstoffleitung(en) (115) zu dem Brennstoffeinlass (13) der Brenneranordnung (106) transportiert wird,
• das Primäroxidationsmittel aus der Quelle der Primäroxidationsmittels (103) über die Primäroxidationsmittelleitung(en) (114) zu dem Primäroxidationsmitteleinlass (10) transportiert wird,
• das Sekundäroxidationsmittel durch die Sekundäroxidationsmittelleitung(en) (113) aus der Quelle des Sekundäroxidationsmittels (102) zu der Heizvorrichtung (101) transportiert wird, wobei das Sekundäroxidationsmittel auf eine Temperatur von mindestens 100 °C vorgeheizt wird und das vorgeheizte Sekundäroxidationsmittel durch die Sekundäroxidationsmittelleitung(en) (110) zu dem Sekundäroxidationsmitteleinlass (7) transportiert wird,
• der Brennstoff und das Primäroxidationsmittel mittels des Primärbrenners (9) der Brenneranordnung (106) in die Verbrennungszone injiziert werden, um so den Brennstoff mit dem Primäroxidationsmittel in einer Primärflamme in der Verbrennungszone teilweise zu verbrennen,
• das vorgewärmte Sekundäroxidationsmittel mittels der Sekundärinjektoren (5) der Brenneranordnung (106) in die Verbrennungszone injiziert wird, um so die Verbrennung des Brennstoffs mit Sekundäroxidationsmittel in einer separaten Sekundärverbrennungsstufe in der Verbrennungszone abzuschließen, und wobei
• während Wartungs- oder Reparaturarbeiten an dem Primärbrenner (9) der Brenneranordnung (106) die Zufuhr von Brennstoff und Primäroxidationsmittel zu der Brenneranordnung (106) unterbrochen wird, während die Zufuhr von vorgewärmtem Sekundäroxidationsmittel zu der Brenneranordnung (106) und die Injektion des vorgewärmten Sekundäroxidationsmittels in die Verbrennungszone mittels der Sekundärinjektoren (5) der Brenneranordnung (106) fortgesetzt werden.

14. Verfahren nach Anspruch 13, wobei das Sekundäroxidationsmittel auf eine Temperatur zwischen 200 °C und 800 °C, vorzugsweise auf eine Temperatur zwischen 500 °C und 750 °C vorgewärmt wird.

15. Verfahren nach einem der Ansprüche 13 und 14, wobei heißes Abgas (112) aus der Verbrennungskammer (100) evakuiert und der Heizvorrichtung (101) zugeführt wird, um das Sekundäroxidationsmittel durch direkten oder indirekten Wärmetausch mit dem evakuierten heißen Abgas (112) zu erwärmen.

## Revendications

1. Installation pour la combustion étagée d'un combustible avec deux oxydants différents : un oxydant principal et un oxydant secondaire, l'installation comprenant une chambre de combustion (100) définissant en son sein une zone de combustion, la chambre de combustion (100) comprenant un sol, un plafond et une paroi réfractaire (200) ayant une face chaude (200) sur le côté de la zone de combustion et une face froide (202) sur le côté opposé, la paroi (200) contenant un ensemble de brûleurs (106) pour l'injection du combustible, de l'oxydant principal et de l'oxydant secondaire dans la zone de combustion, l'ensemble de brûleurs (106) comprenant :
∘ un passage principal (20) s'étendant d'une ouverture d'entrée principale (6) dans la face froide (202) à une ouverture de sortie principale (6') dans la face chaude (201),
∘ un ou plusieurs passages secondaires (21), chaque passage secondaire (21) s'étendant d'une ouverture d'entrée secondaire (8) dans la face froide (202) à une ouverture de sortie secondaire (8') dans la face chaude (201), chaque passage secondaire (21) étant espacé du passage principal (20) de l'ensemble de brûleurs (106),
∘ une unité d'injection principale métallique (30) ayant une entrée de combustible (13) pour le combustible, une entrée d'oxydant principal (100) pour l'oxydant principal et un brûleur principal (9) se terminant en une extrémité d'injection principale pour l'injection du combustible et de l'oxydant principal dans la zone de combustion, le brûleur principal (9) étant inséré dans le passage principal (20) de telle sorte que l'extrémité d'injection principale est positionnée en amont ou au niveau de l'ouverture de sortie principale (6') dudit passage principal (20), et
∘ une unité d'injection secondaire métallique séparée (40) ayant une entrée d'oxydant secondaire (7) pour l'oxydant secondaire et une multitude d'injecteurs secondaires (5), chaque injecteur d'oxydant secondaire (5) se terminant en une extrémité d'injection secondaire pour l'injection de l'oxydant secondaire dans la zone de combustion, chaque injecteur d'oxydant secondaire (5) étant inséré dans un de l'au moins un passage secondaire (21) de telle sorte que l'extrémité d'injection secondaire dudit injecteur d'oxydant secondaire (5) est positionnée en amont ou au niveau de l'ouverture de sortie secondaire (8') du passage secondaire (21) à l'intérieur duquel s'étend l'injecteur secondaire (5),
l'installation comprenant en outre :
∘ une canalisation de combustible (115) raccordant une source de combustible (104) à l'entrée de combustible (13),
∘ une canalisation d'oxydant principal (114) raccordant une source d'oxydant principal (103) à l'entrée d'oxydant principal (10), et
∘ une canalisation d'oxydant secondaire (113, 100) raccordant une source d'oxydant secondaire (102) à l'entrée d'oxydant secondaire (7),
dans laquelle
∘ la canalisation d'oxydant secondaire (113, 100) comporte un dispositif de chauffage (101) pour chauffer l'oxydant secondaire fourni par la source d'oxydant secondaire (102) en amont de l'entrée d'oxydant secondaire (7), le dispositif de chauffage (101) étant adapté pour chauffer un écoulement d'oxydant secondaire jusqu'à une température d'au moins 100 °C,
∘ l'ensemble de brûleurs (106) consiste en une section supérieure située au-dessus d'un plan horizontal (2) et une section inférieure située en dessous dudit plan horizontal (2), moyennant quoi :
∘ l'ouverture d'entrée principale (6) dans la face froide (202) est située sur un côté d'un plan horizontal (2), appelé le côté principal (3'), et l'ouverture d'entrée secondaire (8) du ou des passages secondaires (21) est située dans la face froide (202) sur l'autre côté (4') dudit plan horizontal (2), appelé le côté secondaire,
∘ l'unité d'injection secondaire (40) est attachée à la face froide (202) sur le côté secondaire (4') du plan horizontal (2) et
∘ l'unité d'injection principale (30) est attachée à la face froide (202) sur le côté principal (3') du plan horizontal (2) de telle sorte que le brûleur principal (9) ou des parties de celui-ci peuvent être retirés du passage principal (20) et peuvent être insérés dans le passage principal (20) par le biais de l'ouverture d'entrée principale (8) sur le côté principal (3') sans avoir à accéder au côté secondaire (4').

2. Installation selon la revendication 1, dans laquelle le côté principal (3') est situé en dessous du plan horizontal (2) et le côté secondaire (4') est situé au-dessus du plan horizontal (2).

3. Installation selon la revendication 1 ou 2, dans laquelle la source de combustible (104) est une source d'un combustible gazeux.

4. Installation selon l'une quelconque des revendications précédentes, dans laquelle la source d'oxydant principal (103) est une source d'un oxydant contenant entre 92 % en volume et 100 % d'oxygène.

5. Installation selon l'une quelconque des revendications précédentes, dans laquelle la source d'oxydant secondaire (102) est une source d'un oxydant contenant moins de 50 % en volume d'oxydant, de préférence moins de 25 % en volume d'oxydant.

6. Installation selon la revendication 5, dans laquelle la source d'oxydant secondaire (102) est un souffleur d'air ou un compresseur d'air.

7. Installation selon l'une quelconque des revendications précédentes, dans laquelle le dispositif de chauffage (101) est un dispositif de récupération de chaleur perdue.

8. Installation selon la revendication 7, dans laquelle le dispositif de chauffage (101) comprend un échangeur de chaleur pour chauffer l'oxydant secondaire par échange de chaleur avec un fluide caloporteur, de préférence avec un effluent gazeux (112) provenant de la chambre de combustion (100).

9. Installation selon l'une quelconque des revendications précédentes dans laquelle la paroi (200) présente une multitude des ensembles de brûleurs (106), chacun desdits ensembles de brûleurs (106) étant raccordé à la source d'oxydant secondaire (102) par la canalisation d'oxydant secondaire (113, 110).

10. Installation selon la revendication 9, dans laquelle la canalisation d'oxydant secondaire (113, 110) comprend une vanne d'arrêt pouvant interrompre l'alimentation en oxydant secondaire depuis la source d'oxydant secondaire (102) de plusieurs des ensembles de brûleurs (106).

11. Installation selon l'une quelconque des revendications précédentes, dans laquelle la chambre de combustion (200) est une chambre d'incinération, une chambre de recuit, une chambre de réchauffage, une chambre de calcination, une chambre de fusion, une chambre d'affinage, une chambre de fusion-affinage combinée ou un canal de transport de masse fondue.

12. Installation selon la revendication 11, dans laquelle la chambre de combustion est une chambre de fusion de verre ou de métal, une chambre d'affinage, une chambre de fusion-affinage combinée ou un canal de transport de masse fondue.

13. Procédé pour la combustion étagée d'un combustible avec un oxydant principal et un oxydant secondaire au moyen d'une installation selon l'une quelconque des revendications précédentes, dans lequel :
• le combustible est transporté de la source de combustible (104) à l'entrée de combustible (13) de l'ensemble de brûleurs (106) par la canalisation de combustible (115),
• l'oxydant principal est transporté de la source d'oxydant principal (103) à l'entrée d'oxydant principal (10) par la canalisation d'oxydant principal (114),
• l'oxydant secondaire est transporté par la canalisation d'oxydant secondaire (113) de la source d'oxydant secondaire (102) au dispositif de chauffage (101) où l'oxydant secondaire est préchauffé jusqu'à une température d'au moins 100 °C et l'oxydant secondaire préchauffé est transporté par la canalisation d'oxydant secondaire (110) jusqu'à l'entrée d'oxydant secondaire (7),
• le combustible et l'oxydant principal sont injectés dans la zone de combustion au moyen du brûleur principal (9) de l'ensemble de brûleurs (106) de manière à effectuer la combustion partielle du combustible avec l'oxydant principal dans une flamme principale dans la zone de combustion,
• l'oxydant secondaire préchauffé est injecté dans la zone de combustion au moyen des injecteurs secondaires (5) de l'ensemble de brûleurs (106) de manière à achever la combustion du combustible avec l'oxydant secondaire dans un étage de combustion secondaire séparé dans la zone de combustion, et dans lequel,
• pendant des travaux de maintenance ou de réparation sur le brûleur principal (9) de l'ensemble de brûleurs (106), l'alimentation en combustible et en oxydant principal de l'ensemble de brûleurs (106) est interrompue, alors que l'alimentation en oxydant secondaire préchauffé de l'ensemble de brûleurs (106) et l'injection dudit oxydant secondaire préchauffé dans la zone de combustion au moyen des injecteurs secondaires (5) de l'ensemble de brûleurs (106) sont poursuivies.

14. Procédé selon la revendication 13, dans lequel l'oxydant secondaire est préchauffé jusqu'à une température comprise entre 200 °C et 800 °C, de préférence jusqu'à une température comprise entre 500 °C et 750 °C.

15. Procédé selon l'une quelconque des revendications 13 et 14, dans lequel l'effluent gazeux (112) est évacué de la chambre de combustion (100) et fourni au dispositif de chauffage (101) pour le chauffage de l'oxydant secondaire par échange de chaleur direct ou indirect avec l'effluent gazeux chaud évacué (112).
